# EUROPÄISCHE PATENTSCHRIFT

(11) **EP 2 882 080 B1**
(45) Veröffentlichungstag und Bekanntmachung des Hinweises auf die Patenterteilung: **17.02.2021**
(21) Anmeldenummer: 13196081.7
(22) Anmeldetag: 06.12.2013
(51) Int. Cl.: H02K 3/32

(54) **Dynamoelektrische rotatorische Maschine**
Dynamo-electric rotary machine
Machine rotative dynamoélectrique

(43) Veröffentlichungstag der Anmeldung: 10.06.2015
(73) Patentinhaber: Siemens Aktiengesellschaft, 80333 München (DE)
(72) Erfinder: Bähr, Hubertus, 97631 Bad Königshofen (DE); Eckert, Rainer, 97616 Bad Neustadt / Herschfeld (DE)

(56) Entgegenhaltungen:
- EP-A1- 1 496 596
- EP-A1- 2 360 813
- JP-A- 2010 263 675
- US-A1- 2013 193 800

## Beschreibung

Die Erfindung betrifft eine dynamoelektrische rotatorische Maschine mit einem Stator und einem Luftspalt, der zwischen Stator und Rotor angeordnet ist, wobei die Zähne jeweils aus hintereinander geschichteten Blechen aufgebaut sind und zumindest abschnittsweise von einem Isolationsmaterial umgeben sind, das von Spulen umfasst wird.

Dynamoelektrische Maschinen weisen einen Stator auf, der mit einem Wicklungssystem versehen ist, das im Betrieb der dynamoelektrischen Maschine mit einem Rotor elektromagnetisch wechselwirkt und somit ein Drehmoment an einer Antriebswelle bereitstellt.

Das Wicklungssystem bei derartigen Statoren ist als gesehnte Wicklungen oder auch als konzentrierte Wicklung ausgelegt. Konzentrierte Wicklungen, auch als Zahnspulen bezeichnet, umfassen jeweils nur einen Zahnschaft eines Zahnes. Die Wicklungen, also die gesehnten als auch die konzentrierten Wicklungen, müssen gegenüber dem geerdeten Blechpaket des Stators isoliert werden. Dazu sind in bekannter Art und Weise Isolationsmaterialien vorgesehen, die sich zwischen Spule und Zahn befinden.

So sind mehrere Arten der Isolierung zwischen Spule und Blechpaket des Stators bekannt.

So werden beispielsweise bei einem Sternjochpaket des Stators Isolationskörper radial von außen auf die Zähne des Stators gesetzt.

Aus der EP 1 496 596 A1 ist ein Stator einer elektrischen Maschine bekannt, dessen Zähne an den Stirnseiten Endkappen aufweisen.

Aus der EP 2 360 813 A1 ist eine elektrische Maschine bekannt, bei der in Nuten des Stators Phasentrenner zwischen Wicklungen vorgesehen sind.

In der JP 2010 263675 A sind Endkappen von Einzelzähnen eines Stators einer elektrischen Maschine gezeigt.

Aus der US 2013/0193800 A1 ist eine elektrische Maschine mit einem Stator aus Zähnen bekannt, bei der die Zähne Isolierteile aufweisen, die sich im axialen Verlauf eines Zahnes überlappen.

Aus der EP 1 517 426 B1 ist eine elektrische Rotationsmaschine mit einem Stator bekannt, bei der Endisolationen vorgesehen sind, die in Kerben des Stators eingreifen, um dadurch eine Isolation zu bilden.

Nachteilig dabei ist, dass entweder die vorhandenen Isolationsmöglichkeiten für eine Einzelzahntechnik nicht geeignet sind oder aber keine ausreichende Isolierung der Spule über den axialen Verlauf eines Zahnes erlauben.

Ausgehend davon, liegt der Erfindung die Aufgabe zugrunde, eine dynamoelektrische Maschine, deren Stator aus Einzelzähnen aufgebaut ist, mit Spulenkörpern zu versehen, die die oben genannten Nachteile vermeiden.

Die Lösung der gestellten Aufgabe gelingt durch eine dynamoelektrische rotatorische Maschine mit:
einem Stator, der ein in Nuten positioniertes Wicklungssystem aufweist und einem Rotor, der magnetisch oder elektrisch erregt ist und durch einen Luftspalt vom Stator beabstandet ist, wobei sich der Rotor aufgrund elektromagnetischer Wechselwirkungen mit dem Stator um eine Achse dreht, wobei der Stator eine Vielzahl von Zähnen aufweist, die jeweils axial geschichtete Bleche aufweisen und damit Teilblechpakete bilden, wobei die Zähne des Stators zum Luftspalt weisen, wobei die Teilblechpakete der Zähne jeweils zwei axiale Stirnseiten aufweisen, wobei die Zähne jeweils von einer Spule umgeben sind, wobei zumindest zwischen der Spule und dem jeweiligen Zahn Isolationsmaterial vorgesehen ist, wobei das Isolationsmaterial als Spulenkörper ausgebildet ist, der pro Zahn aus zwei Teilen besteht, die sich ausgehend von den jeweiligen Stirnseiten des jeweiligen Zahns an zumindest einem axialen Abschnitt des Teilblechpakets des Zahns, insbesondere den Seitenwänden dieses Zahns überlappen, dadurch gekennzeichnet, dass der erste Teil des Spulenkörpers eines Zahns in die Ausnehmung des axialen Teilblechpakets einrastet, und wobei der zweite Teil des Spulenkörpers dieses Zahns in eine Kerbe des ersten Teils des Spulenkörpers einrastet.

Erfindungsgemäß wird nunmehr durch die Überlappung der beiden Teile des Spulenkörpers keine Einschränkung des Nutquerschnitts und damit des Kupferfüllfaktors einer Nut verursacht. Dies gelingt durch eine Verringerung der Dicke des Blechpakets in einem vorgebbaren Abschnitt eines Zahnelements, ohne die magnetische Leitfähigkeit des Teilblechpakets in diesem Abschnitt zu beeinträchtigen. Dabei wird der Spulenkörper im Wesentlichen quergeteilt, wobei zur Vermeidung von Kriechströmen im Bereich der Stoßstellen der beiden Spulenkörperteile eine Überlappung stattfindet.

Somit wird die Nutenquerschnittsfläche und damit der Kupferfüllfaktor der Nut beibehalten, bei gleichzeitig ausreichender Isolierung zwischen Spule und geerdetem Zahn. Der Nutenquerschnitt, also den Raum zwischen zwei Zähnen wird erfindungsgemäß nicht unnötig durch Isolationsmaterial gefüllt. Der damit verbundene vergleichsweise erhöhte Kupferfüllfaktor der Nut steigert die Leistungsfähigkeit der dynamoelektrischen Maschine.

Die Erfindung sowie weitere vorteilhafte Ausgestaltungen der Erfindung werden anhand prinzipiell dargestellter Ausführungsbeispiele näher erläutert; darin zeigen:
- FIG 1: einen prinzipiellen Längsschnitt einer dynamoelektrischen Maschine,
- FIG 2: ein Zahnelement,
- FIG 3: in einer teilperspektivischen Darstellung die beiden Teile eines Spulenkörpers,
- FIG 4: eine perspektivische Aufsicht auf einen freigelegten Zahnschaft,
- FIG 5: eine perspektivische Darstellung eines mit dem Spulenkörper versehenen Zahnelements.

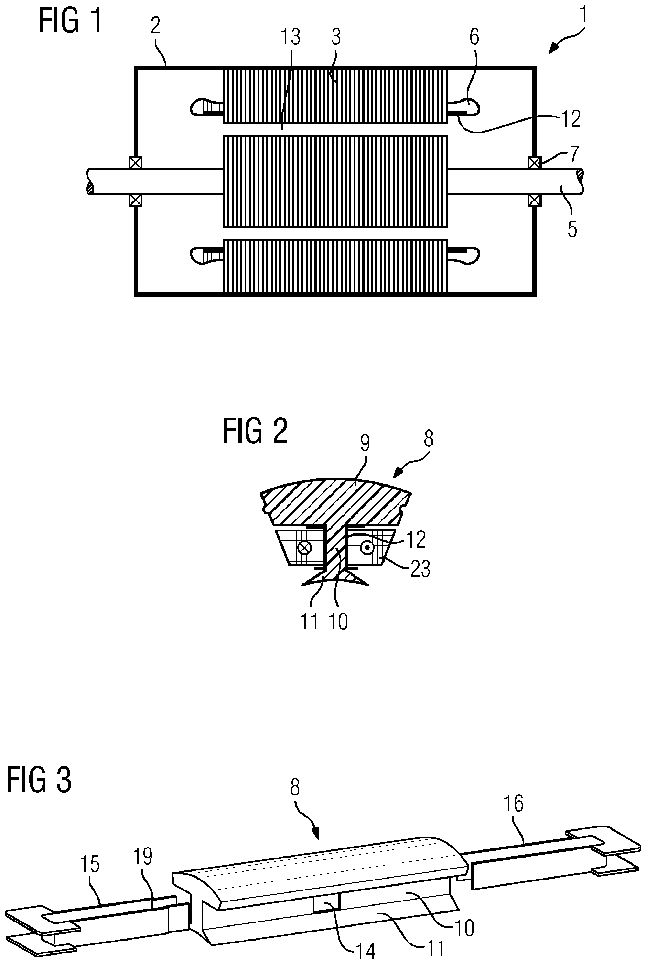

FIG 1 zeigt in einem prinzipiellen Längsschnitt eine rotatorische dynamoelektrische Maschine 1 und ein Gehäuse 2, in das ein Stator 3 eingesetzt ist. Der Stator 3 weist ein Wicklungssystem 6 auf, das in nicht näher dargestellten axial verlaufenen Nuten des Blechpakets des Stators 3 eingesetzt ist. Das Wicklungssystem 6 ist im vorliegenden Beispiel aus Zahnspulen, also konzentrierten Wicklungselementen aufgebaut, wobei in Umfangsrichtung betrachtet, der Stator 3 aus Einzelzähnen aufgebaut ist, die in Umfangsrichtung betrachtet aneinandergereiht sind.

Über einen Luftspalt 13 findet nun im Betrieb der dynamoelektrische Maschine 1 eine elektromagnetische Wechselwirkung mit einem Rotor 4 statt, der in diesem Fall mit nicht näher dargestellten Permanentmagneten an der Oberfläche oder in axialen Ausnehmungen seines Blechpakets angeordnet sind. Der Rotor 4 ist mit einer Welle 5 drehfest verbunden, so dass über die Welle 5 eine Arbeitsmaschine angetrieben werden kann. Über Lager 7 und dementsprechende Lagerschilde ist das Gehäuse 2 an der Welle 5 abgestützt.

In dieser Darstellung sind bereits die Spulenkörper 12 angedeutet, die das Wicklungssystem 6 von dem geerdeten Blechpaket des Stators 3 isolieren.

FIG 2 zeigt ein Zahnelement 8, wobei eine Vielzahl von derartigen Zahnelementen 8 in Umfangsrichtung angeordnet, den Stator 3 ausbilden. Diesem Zahnelement 8 ist ein Zahnkopf 9 zugeordnet, in dem - falls mehrere Zahnelemente 8 zusammengefügt sind - der Magnetfluss zu den anderen Zahnelementen 8 führt ist. Um den Zahnschaft 10 ist eine Spule 23, insbesondere eine Zahnspule angeordnet. Die Zahnspule ist vom Zahnschaft und zumindest von Teilen des Zahnkopfes 9 bzw. eines Zahnfußes 11 durch den Spulenkörper 12 isoliert beabstandet. Der Zahnfuß 11 ist, wie dieser Darstellung leicht entnommen werden kann, breiter als der Zahnschaft 10 ausgeführt, so dass ein einfaches axiales Aufsetzen des Spulenkörpers 12 auf den Zahnschaft von der Luftspaltseite aus nicht durchgeführt werden kann.

Aus diesem Grunde ist ein axiales Einsetzen der Spulenkörper 12 auf den Zahnschaft notwendig. Das anschließende Wickeln der Spule 23 geschieht sobald die beiden Teile des Spulenkörpers 12 am Zahnelement 8 positioniert sind.

FIG 3 zeigt in einer teilperspektivischen Darstellung das Zahnelement 8 mit einer in diesem Fall mittig angeordneter Ausnehmung 14, in das eine Stufung 19 einer Seitenwand eines ersten Teils 15 des Spulenkörpers 12 beim axialen Aufstecken auf das Zahnelement 8 einrastet. Durch die Stufung 19 wird erreicht, dass das zweite Teil 16 des Spulenkörpers 12 beim anschließenden ebenfalls von der Gegenseite axialen Aufschiebungen in diese Stufung 19 eingreift und sich so mechanisch positioniert.

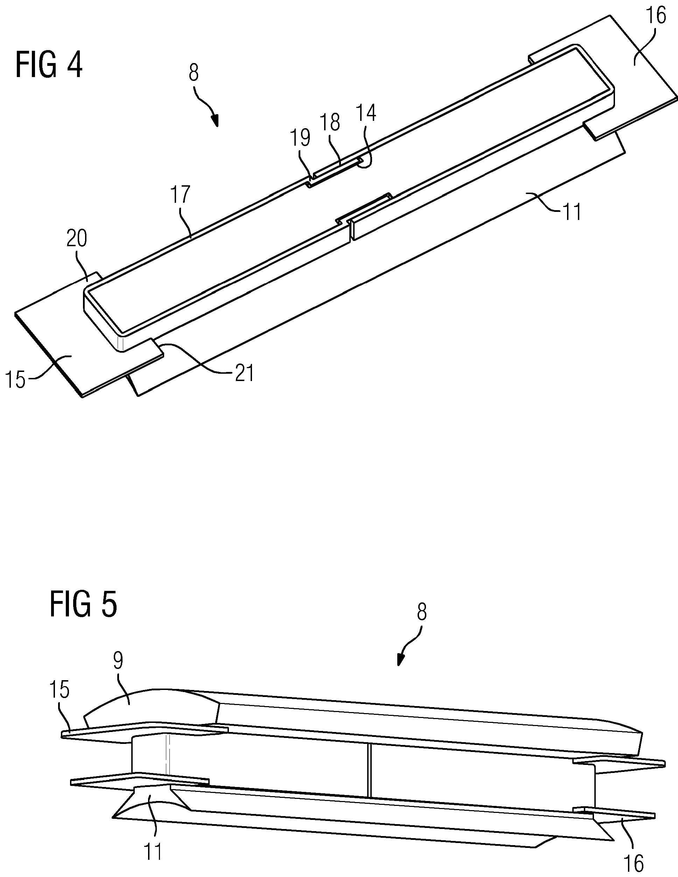

FIG 4 zeigt die beiden Teile 15 und 16 des Spulenkörpers 12 im montierten Zustand, wobei aus Gründen der Übersichtlichkeit an dem Zahnelement 8 der Zahnkopf 9 entfernt wurde. Die Stufung 19 der Seitenwand des ersten Teils 15 des Spulenkörpers 12 greift in die Ausnehmung 14 ein, so dass der zweite Teil 16 des Spulenkörpers 12 eine nach außen hin gerade Seitenwand aufweist, die aber vorteilhafterweise mit kleineren Kerbungen versehen werden kann, um sich am ersten Teil 15 zu fixieren somit den gesamten Spulenkörper 12 ausbilden. Die dabei auftretende Überlappung der Teile 15 und 16 vermeidet Kriechströme die die Isolation beeinträchtigen können.

An den Stirnseiten des Zahnelements 8 bilden die beiden Teile des Spulenkörpers 12 jeweils Schultern 20 aus, auf bzw. zwischen denen der Wickelkopf ruht, wie beispielsweise in FIG 1 dargestellt. Diese Anordnung dient zum einen der Isolation als auch der Kontaktierung des Wickelkopfes, wie dies der FIG 5 auch zu entnehmen ist.

In einer weiteren vorteilhaften Ausgestaltung verläuft ein Rand 21, ausgehend von den Schultern 20, um das gesamte Zahnelement, so dass eine Isolation in Richtung Zahnfuß 11 und Zahnkopf 9 geschaffen ist.

Vorteilhaftweise sind die Abschnitte des Spulenkörpers 12 im Bereich der Stirnseiten der Zahnelemente 8 entgegen FIG 4 mit Radien versehen, die dem Biegeradius des Drahtes der Spule 23 entsprechen - vorzugsweise ein Radius mit der Hälfte der Schaftbreite.

Derartige dynamoelektrische Maschinen 1 eignen sich für Antrieb in Werkzeugmaschinen als Hauptantriebe oder Hilfsantriebe, ebenso wie für Antriebe der E-Mobility wie beispielsweise E-Cars und elektrischen Bahnen.

## Patentansprüche

1. Dynamoelektrische rotatorische Maschine (1) mit:
einem Stator (3), der ein in Nuten positioniertes Wicklungssystem (6) aufweist und einem Rotor (4), der magnetisch oder elektrisch erregt ist und durch einen Luftspalt (13) vom Stator (3) beabstandet ist, wobei sich der Rotor (4) aufgrund elektromagnetischer Wechselwirkungen mit dem Stator (3) um eine Achse dreht, wobei der Stator (3) eine Vielzahl von Zähnen aufweist, die jeweils axial geschichtete Bleche aufweisen und damit Teilblechpakete bilden, wobei die Zähne des Stators (3) zum Luftspalt (13) weisen, wobei die Teilblechpakete der Zähne jeweils zwei axiale Stirnseiten aufweisen, wobei die Zähne jeweils von einer Spule (23) umgeben sind, wobei zumindest zwischen der Spule (23) und dem jeweiligen Zahn Isolationsmaterial vorgesehen ist, wobei das Isolationsmaterial als Spulenkörper (12) ausgebildet ist, der pro Zahn aus zwei Teilen besteht, die sich ausgehend von den jeweiligen Stirnseiten des jeweiligen Zahns an zumindest einem axialen Abschnitt des Teilblechpakets des Zahns, insbesondere den Seitenwänden dieses Zahns überlappen, **dadurch gekennzeichnet, dass** der erste Teil des Spulenkörpers (12) eines Zahns in die Ausnehmung (14) des axialen Teilblechpakets einrastet, und wobei der zweite Teil des Spulenkörpers (12) dieses Zahns in eine Kerbe des ersten Teils des Spulenkörpers (12) einrastet.

2. Dynamoelektrische rotatorische Maschine (1) nach Anspruch 1, **dadurch gekennzeichnet, dass** sich die beiden Teile dieses Spulenkörpers (12) in einer Ausnehmung des axialen Abschnitts des Teilblechpakets des Zahns überlappen, derart, dass der Nutquerschnitt unverändert bleibt.

3. Dynamoelektrische rotatorische Maschine (1) nach Anspruch 1, **dadurch gekennzeichnet, dass** die Zähne Einzelzähne sind oder Teil eines einstückigen Blechs mit mehreren Zähnen sind.

## Claims

1. Dynamo-electric rotary machine (1) having:
a stator (3) which has a winding system (6) positioned in slots and a rotor (4) which is magnetically or electrically excited and is spaced from the stator (3) by an air gap (13), wherein the rotor (4) rotates about an axis due to electromagnetic interactions with the stator (3), wherein the stator (3) has a plurality of teeth, each of which have axially layered laminations and thus form partial laminated cores, wherein the teeth of the stator (3) point to the air gap (13), wherein the partial laminated cores of the teeth each have two axial end faces, wherein the teeth are each surrounded by a coil (23), wherein insulation material is provided at least between the coil (23) and the respective tooth, wherein the insulation material is embodied as a coil former (12) which consists of two parts per tooth, which, starting from the respective end faces of the respective tooth, overlap on at least one axial section of the partial laminated core of the tooth, in particular the side walls of said tooth, **characterised in that** the first part of the coil former (12) of a tooth engages in the recess (14) of the axial partial laminated core, and wherein the second part of the coil former (12) of said tooth engages in a notch in the first part of the coil former (12).

2. Dynamo-electric rotary machine (1) according to claim 1, **characterised in that** the two parts of said coil former (12) overlap in a recess in the axial section of the partial laminated core of the tooth, such that the slot cross-section remains unchanged.

3. Dynamo-electric rotary machine (1) according to claim 1, **characterised in that** the teeth are individual teeth or are part of a one-piece lamination with a plurality of teeth.

## Revendications

1. Machine (1) dynamoélectrique tournante comprenant :
un stator (3) qui a un système (6) d'enroulement placé dans des encoches, et un rotor (4) qui est excité magnétiquement ou électriquement et qui est à distance du stator (3) par un entrefer (13), le rotor (4) tournant autour d'un axe en raison d'interactions électromagnétiques avec le stator (3), le stator (3) ayant une pluralité de dents, qui ont chacune des tôles feuilletées axialement et forment ainsi des paquets partiels de tôles, les dents du stator (3) étant tournés vers l'entrefer (13), les paquets partiels de tôles des dents ayant chacun deux côtés frontaux axiaux, les dents étant entourées respectivement d'une bobine (23), un matériau isolant étant prévu au moins entre la bobine (23) et la dent respective, le matériau isolant étant constitué sous la forme d'un mandrin (12), qui est constitué par dent de deux parties, lesquelles se chevauchent à partir des côtés frontaux respectifs de la dent respective sur au moins un segment axial du paquet de tôle partiel de la dent, notamment sur les parois latérales de cette dent, **caractérisée en ce que** la première partie du mandrin (12) d'une dent s'encliquette dans l'évidement (14) du paquet partiel de tôles axial et dans laquelle la deuxième partie du mandrin (12) de cette dent s'encliquette dans une entaille de la première partie du mandrin (12).

2. Machine (1) dynamoélectrique tournante suivant la revendication 1, **caractérisée en ce que** les deux parties de ce mandrin (12) se chevauchent dans un évidement du segment axial du paquet partiel de tôle de la dent de manière à laisser sans changement la section transversale de l'encoche.

3. Machine (1) dynamo-électrique tournante suivant la revendication 1, **caractérisée en ce que** les dents sont des dents individuelles ou font partie d'une tôle d'une seule pièce ayant plusieurs dents.
